# EUROPÄISCHE PATENTANMELDUNG

(11) **EP 1 231 104 A1**
(43) Veröffentlichungstag der Anmeldung: **14.08.2002**
(21) Anmeldenummer: 01102677.0
(22) Anmeldetag: 07.02.2001
(51) Int. Cl.: B60P 1/44

(54) **Fussschaltereinheit für Ladeplattformen von Ladebordwandsystemen**

(71) Anmelder: Sörensen Hydraulik, Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(57) **Zusammenfassung**

Es wird eine Fußschaltereinheit (10) für Ladeplattformen (11) von Ladebordwandsystemen von Fahrzeugen vorgeschlagen, mit denen die Ladeplattform (11) durch entsprechende Betätigung von Fußschaltern (12, 13) zum Anheben und Absenken veranlaßt wird, umfassend ein Gehäuse, in dem die Fußschalter (12, 13) vorhanden sind, wobei das Gehäuse auf der Ladeplattform (11) befestigbar ist. Dabei besteht das Gehäuse aus einem plattenförmigen Element (14).

## Beschreibung

Die Erfindung betrifft eine Fußschaltereinheit für Ladeplattformen von Ladebordwandsystemen für Fahrzeuge, mit denen die Ladeplattform durch entsprechende Betätigung von Fußschaltern zum Anheben und Absenken veranlaßt wird, umfassend ein Gehäuse, in dem die Fußschalter vorhanden sind, wobei das Gehäuse auf der Ladeplattform befestigbar ist.

Fußschaltereinheiten dieser Art werden in den unterschiedlichsten Varianten bei Ladeplattformen eingesetzt. Ladebordwandsysteme unterliegen regelmäßig einer rauhen Handhabung durch die Bedienungsperson, die die Ladeplattform anheben und absenken läßt, insbesondere dann, wenn die Bedienungsperson mit der Last auf der Ladeplattform stehend das Anheben und Absenken mit den Füßen über die Fußschalter veranlaßt. Aus diesem Grunde sind bisherige Fußschaltereinheiten verhältnismäßig massiv ausgebildet, d.h. sie weisen regelmäßig ein Fußschaltergehäuse auf, das dem rauhen Handhabungsbetrieb standzuhalten vermag, zumal auch durch entsprechend massiven Aufbau Sorge dafür getragen werden muß, daß die Fußschaltereinheit auch beim unbeabsichtigten Verrutschen von Gütern auf die Fußschaltereinheit oder das versehentliche Absetzen von Gütern auf der Fußschaltereinheit diese keinen Schaden nimmt, d.h. die darin untergebrachten Fußschalter nicht in ihrer Funktion gestört werden.

Die bisher bekannten Fußschaltereinheiten sind zudem derart ausgestaltet, daß sie auf ihrer der Bedienungsseite abgewandten Seite elektronische und/oder elektrische Steuer- und/oder Regeleinrichtungen aufweisen, die dem Zwecke dienen, die von den eigentlichen Fußschaltern zum Heben und Absenken der Ladebordwand gegebenen elektrischen Signale geeignet aufbereiten und an eine Steuereinheit für das Ladebordwandsystem in seiner Gesamtheit zu übermitteln. Durch diese Maßnahmen, wie sie bisher vorgenommen wurden, sind die Fußschaltereinheiten verhältnismäßig massiv, d.h. in ihrer Dicke, bezogen auf die Ladeplattform, sehr hoch ausgebildet und, ebenfalls bezogen auf die Ladeplattform, sehr breit, um auf der Rückseite einen Raum zu schaffen, in dem die elektrische und/oder elektronische Steuerund Regeleinrichtung untergebracht werden kann, wobei dieser an der Unter- bzw. Rückseite zu schaffende Raum der Fußschaltereinheit für die vorgenannten Zwecke auch noch wasser-, staub- dampfdicht und dergl. gekapselt sein muß, was zusätzlichen Raum für die hermetische Kapselung erfordert.

Die vorbeschriebene hohe und massive Ausbildung des Gehäuses der Fußschaltereinrichtung hat zudem einen weiteren erheblichen Nachteil, insbesondere dann, wenn die Fußschaltereinheit bei als sog. Faltplattformen ausgebildeten Ladeplattformen eingesetzt werden soll und auch dann, wenn die Ladeplattformen bei in Form von sog. Kühlkoffern ausgebildeten Fahrzeugkarosserien eingesetzt werden sollen. Bei den sog. Faltladeplattformen wird die Ladeplattform während des Nichtbetriebes gefaltet und im gefalteten Zustand unter den Heckbereich der Ladefläche des Fahrzeugs verschoben. Eine in der lichten Höhe zu große Fußschaltereinheit, wie sie bisher bekannt ist, ist für den Halt und die Auflagerung der Ladeplattformelemente im zusammengeklappten Zustand äußerst hinderlich und es müssen Maßnahmen ergriffen werden, daß die Fußschaltereinheit selbst nicht unmittelbar auf den darauf geklappten Teil der Ladeplattform zu liegen kommt. Bei Fahrzeugkarosserien in Form der genannten Kühlkoffer ist zum Erhalt einer gekühlten Atmosphäre im Kühlkoffer, anders als bei normalen Kraftfahrzeug-Karosserien für Stückgut und dgl., eine gesonderte rückwärtige Tür vorhanden. Da diese Tür zum leichten Entladen und Beladen des Kühlkoffers zum Boden hin schwellenfrei sein muß, weißt die den Kühlkoffer abschließende Tür nur eine geringfügige Freiheit oberhalb der Ladeplattform auf, wenn die Ladeplattform sich in angehobener Stellung befindet. Die bekannten Fußschaltereinheiten mit der beschriebenen, erheblichen lichten Höhe erzwingen somit, daß die Ladeplattform, damit die Tür des Kühlkoffers überhaupt gehöffnet und geschlossen werden kann, zunächst ein Anheben der Ladeplattform so hoch, daß die Tür des Kühlkoffers "über" die Fußschaltereinheit gerade noch geschwenkt werden kann und dann ein weiteres Anheben, bis die Ladeplattform sich auf dem Niveau der Ladefläche des Kühlkoffers befindet. Diese Handhabung ist, da sie auch im umgekehrten Falle des Schließens der Tür des Kühlkörpers derart vonstatten gehen muß, äußerst umständlich und bedienerunfreundlich.

Schließlich sind die vorangehend beschriebenen, im Stand der Technik bekannten Gehäuse der Fußschaltereinheiten und damit die Fußschaltereinheiten schlechthin, nur sehr kostenträchtig herstellbar, da sie regelmäßig eine spezielle Ausgestaltung erfordern, sei es in Form eines speziell modellierten und gefertigten metallischen Gehäuses, das aus Spritz- bzw. Druckguß besteht, sei es in Form eines derartigen Gehäuses, das zudem den besagten Hohlraum für die elektrischen und/oder elektronischen Steuerungs- und/oder Regelungsmittel aufweist, wobei noch hinzu kommt, daß, um derartige bekannte Fußschaltereinheiten überhaupt durch die bzw. an der Ladeplattform aufnahmefähig zu machen bzw. befestigen zu können, die Ladeplattform an der Stelle der Befestigung der Fußschaltereinheit auf der Ladeplattform auf aufwendige Weise durch Herstellung von Aufnahmelöchern bearbeitet werden muß, wodurch zudem noch zumindest eine örtliche Schwächung der Ladeplattform nachteiligerweise erreicht wird.

Es ist deshalb Aufgabe der vorliegenden Erfindung, eine Fußschaltereinheit der eingangs genannten Art zu schaffen, mit der eine sehr geringe Höhe, d.h. ein sehr geringes Auftragen oberhalb der Ladeplattform erreichbar ist, auf der das Gehäuse der erfindungsgemäßen Fußschaltereinheit aufgebracht werden soll, die einfach und kostengünstig herstellbar sein soll, die keine Durchlöcherung der Ladeplattform zum Zwecke ihrer Montage erfordert, die dennoch dem rauhen Handhabungsbetrieb von Ladeplattformen standhält und zudem ggf. noch eine mechanische Verstärkung der Ladeplattform und damit eine größere Belastbarkeit der Ladeplattform ermöglicht, wobei die erfindungsgemäße Fußschaltereinheit sowohl bei Faltladeplattformen als auch bei in Form von Kühlkoffern ausgebildeten Karosserien von Fahrzeugen gleichermaßen gut eingesetzt werden kann und einen vom normalen Betrieb der Ladeplattform nicht abweichenden Anhebe- und Absenkbetrieb auch bei als Kühlkoffern ausgebildeten Fahrzeugkarosserien ermöglicht.

Gelöst wird die Aufgabe gem. der Erfindung dadurch, daß das Gehäuse aus einem plattenförmigen Element besteht.

Mittels der erfindungsgemäßen Lösung ist der bisher im Stand der Technik in der einen oder der anderen Form vorgegebene konstruktive Weg der Ausgestaltung des Gehäuses der Fußschaltereinheit vollständig verlassen worden. Anstelle aufwendiger Metallspritzgußkonstruktionen, die im Vorwege einen aufwendigen und kostenträchtigen Bau einer Form als Spritzgußform erfordern, wird erfindungsgemäß lediglich ein plattenförmiges Element verwendet, das definitionsgemäß im wesentlichen durch einen durch zwei im wesentlichen parallele Ebenen begrenzten Körper gebildet wird, wobei der Abstand dieser Ebenen, d.h. die Dicke, klein im Vergleich zu den anderen Maßen ist. Es ist somit möglich, als Gehäuse das erfindungsgemäße plattenförmige Element sowohl für Faltladeplattformen als auch im Zusammenhang mit Ladeplattformen, die mit Kühlkoffern als Fahrzeugkarosserien ausgerüstet sind, zu verwenden, da für beide Anwendungsfälle die Dicke des plattenförmigen Elements so gering gehalten werden kann, daß die Tür des Kühlkoffers auch bei in Endstellung angehobener Ladeplattform ohne Schwierigkeit geöffnet und geschlossen werden kann und bei Anwendung bei Faltladeplattformen keine Beeinträchtigung der Faltmöglichkeiten erfolgt. Zudem ist die erfindungsgemäße Lösung sehr preisgünstig realisierbar und die erfindungsgemäße Lösung ist einfach auf der Ladeplattform befestigbar.

Gem. einer vorteilhaften Ausgestaltung der Erfindung weist das plattenförmige Element einen im wesentlichen U-profilförmigen Querschnitt auf, wodurch die Stabilität des plattenförmigen Elementes erhöht werden kann bei gleichzeitiger Möglichkeit der Verringerung des Abstandes der Ebenen der Platte, d.h. eine Verringerung der Dicke. Die Stege weisen, bezogen auf die Innenfläche bzw. Innenebene des Elements, wenn es einen U-profilförmigen Querschnitt aufweist, eine Höhe entsprechend der Höhe von der Ladeplattform vorspringenden Stegen auf. Eine Vielzahl von Ladeplattformen weisen einen profilierten Oberflächenquerschnitt auf, d.h. von der Oberfläche der Ladeplattform stehen Stege nach oben, d.h. von der Ladeplattform weg, hervor. Die Stege des plattenförmigen Elements greifen somit in die jeweiligen Täler zwischen zwei vorstehenden Stegen, so daß das plattenförmige Element mit seiner Innenoberfläche bzw. Innenebene auf den Stegen, die sich von der Oberfläche der Ladebordwand erheben bzw. vorstehen, aufliegt. Dadurch wird die Auftragdicke des plattenförmigen Elements bei größtmöglicher Stabilität auf das irgendwie mögliche Minimum begrenzt. Dadurch, daß die Stege des plattenförmigen Elements in die Stegtäler zwischen zwei Stegen der Ladeplattform eingreifen, wird das plattenförmige Element auch in bezug auf seinen Sitz relativ zur Ladeplattform in hohem Maße stabilisiert und fixiert.

Gem. einer weiteren vorteilhaften Ausgestaltung der Fußschaltereinheit wird auf der Oberfläche des Elements, die im befestigten Zustand der Ladeplattform abgewendet ist, ein das Element wenigstens teilweise bedeckendes zweites Element angeordnet. Dieses zweite plattenförmige Element, bei dem der Abstand der beiden im wesentlichen parallelen Ebenen ebenfalls klein im Vergleich zu den anderen Maßen ist, d.h. die Dicke der Platte gering ist, hat die Aufgabe, eine gewisse Trennung zwischen bspw. von an beiden Enden des ersten plattenförmigen Elements angeordneten Fußschaltern zu bewirken. Des weiteren bewirkt das zweite plattenförmige Element auch, daß irrtümlich auf der Fußschaltereinheit abgestellte Güter die Auslösung des Fußschalters nicht veranlassen können, denn das zweite plattenförmige Element stellt dafür ein Hindernis dar.

Vorzugsweise kann das zweite plattenförmige Element mit dem ersten plattenförmigen Element integral ausgebildet sein, d.h. aus einem Stück gefertigt sein, es ist aber auch vorzugsweise möglich, das zweite plattenförmige Element auf dem ersten plattenförmigen Element zu befestigen, d.h. zuvor als gesondertes Teil auszubilden, und dann bspw. mittels Schraubverbindungen auf dem ersten plattenförmigen Element zu befestigen.

Auch das zweite plattenförmige Element kann, ähnlich dem ersten plattenförmigen Element, gem. einer weiteren vorteilhaften Ausgestaltung der Fußschaltereinheit im Querschnitt im wesentlichen U-profilförmig ausgebildet sein, wobei zwischen den dabei gebildeten Stegen eine flache Öffnung entsprechend der Innenöffnung zwischen den Stegen des ersten plattenförmigen Elements gebildet wird. Auch durch diese Maßnahme kann bei Verminderung der Dicke des zweiten plattenförmigen Elements eine Erhöhung der Stabilität erreicht werden, d.h. auch i.V.m. dem entsprechend U- profilförmig ausgebildeten ersten plattenförmigen Element. In der flachen Öffnung zwischen den Stegen des zweiten plattenförmigen Elements können bspw. Markierungs- und/oder Hinweismittel vorgesehen werden, die dem Bediener der Fußschaltereinheit Hinweise auf die zu betätigenden Fußschalter über das Heben und Senken der Ladeplattform geben und ggf. auch Warnhinweise in bezug auf mögliche Fehlbetätigungsmöglichkeiten.

Im Lichte des vorangehend Gesagten müssen auch die eigentlichen Fußschalter der Fußschaltereinheit sehr flach ausgebildet sein, damit sie möglichst im wesentlichen nicht dicker bzw. höher als das erste plattenförmige Element sind. Zu diesem Zwecke eignen sich als fußbetätigbare Schalter vorzugsweise Mikroschalter oder vorzugsweise Sensorschalter, die im Handel im Vergleich zu ihrer lateralen Ausdehnung mit geringen Dicken verfügbar sind und sich zudem leicht wasserdicht kapseln lassen bzw. schon in wasser- und staubdichter Konfiguration angeboten werden.

Vorteilhafterweise sind die mit den fußbetätigbaren Schaltern zusammenwirkenden elektrischen und/oder elektronischen Steuer- und/oder Regeleinrichtungen abgesetzt von der Fußschaltereinheit angeordnet, d.h. es brauchen erfindungsgemäß in der Ladeplattform am Orte der Befestigung der Fußschaltereinheit keine Öffnungen vorgesehen werden, in denen, wie teilweise bisher, Platz vorgesehen werden mußte, um die voraufgezeigten Mittel unterbringen zu können. Die vorzugsweise vorgeschlagene Ausgestaltung der Fußschaltereinheit hat zudem den Vorteil, daß die Fußschaltereinheit lediglich bezüglich der fußbetätigbaren Schalter mit entsprechenden herangeführten elektrischen Leitungen verbunden werden müssen. Die Regelung und/oder Steuerung des Hebens, Absenkens und ggf. Klappens bzw. Zusammenklappens der Ladeplattform erfolgt zentral von einer entsprechenden Steuereinheit, die am Fahrzeug an für die Bedienungsperson zugänglicher Stelle angeordnet ist.

Wie eingangs dargestellt, ist es ein wesentliches Element der Aufgabe und Lösung der Erfindung eine preisgünstige Ausgestaltung der Fußschaltereinheit zu schaffen, wobei die Lösung der Erfindung es geradezu anbietet, das plattenförmige Element in streifenförmigen Längen als Halbzeug herstellen zu lassen und dieses vorzugsweise lediglich in der gewünschten Dimension abzulängen, d.h. auf einfache Weise auf die gewünschte Länge entsprechend der Gesamtdimension des Ladebordwandsystems anzupassen und somit auf einfache Weise an unterschiedlicher Ausgestaltungen des Ladebordwandsystems anpassen zu können.

Obwohl es grundsätzlich möglich ist, als Werkstoff für das plattenförmige Element einen beliebigen geeigneten, mechanisch und gegen Umwelteinflüsse widerstandsfähigen Werkstoff zu verwenden, ist es vorteilhaft, wenigstens das plattenförmige Element aus einem Leichtmetallwerkstoff herzustellen, der einerseits hohe Festigkeit und andererseits ein geringes Gewicht und auch bei geeigneter Legierung eine hohe Widerstandsfähigkeit gegen Umwelteinflüsse wie Regen, Eis, Salz, Staub, Kraftstoffdämpfe und dgl. hat.

Grundsätzlich ist es aber auch möglich, wenigstens das erste plattenförmige Element, vorzugsweise aus einem Kunststoffwerkstoff auszubilden oder vorzugsweise wenigstens das erste plattenförmige Element aus einem Verbundwerkstoff herzustellen, oder sinngemäß bei integraler Ausbildung das erste plattenförmige Element und das zweite plattenförmige Element aus dem gleichen Werkstoff bestehen zu lassen, bei gesonderter Ausbildung des ersten plattenförmigen Elements und des zweiten plattenförmigen Elements ggf. sogar unterschiedliche Werkstoffe für das jeweilige plattenförmige Element bspw. in Abhängigkeit der zu erwartenden Be- und Abnutzungsparameter zu wählen.

Die Erfindung wird nun unter Bezugnahme auf die nachfolgenden schematischen Zeichnungen anhand eines Ausführungsbeispieles eingehend beschrieben. Darin zeigen:
- Fig. 1: in der Seitenansicht im Schnitt eine Fußschaltereinheit, die aus einem ersten plattenförmigen Element und aus einem damit integral verbundenen zweiten plattenförmigen Element besteht,
- Fig. 2: eine Draufsicht auf das integrale plattenförmige Element gem. Fig. 1,
- Fig. 3: einen Schnitt durch das integrale plattenförmige Element gem. Fig. 1 im auf einer Ladeplattform montierten Zustand unter Andeutung der elektrischen Verbindungsleitungen zu zwei auf der Fußschaltereinheit angeordneten fußbetätigbaren Schaltern,
- Fig. 4: einen Schnitt durch eine Ladeplattform in Querrichtung, auf der das integrale, doppelt U-profilförmige plattenförmige Element in der Stirnansicht dargestellt ist und mit den Stegen in die Täler zwischen jeweils zwei von der Oberfläche der Ladeplattform vorspringenden Stegen eingesetzt ist, und
- Fig. 5: in der Stirnansicht das doppelt U-profilförmig und integral ausgebildete plattenförmige Element im Schnitt.

Es sei vorangestellt, daß die nachfolgend beschriebene Fußschaltereinheit 10 hier beispielhaft mit zwei Fußschaltern 12, 13 ausgerüstet beschrieben wird. Es sind auch Fußschaltereinheiten 10 für die bestimmungsgemäßen Zwecke bekannt, die mehr als zwei Fußschalter 12, 13 aufweisen und es ist auch denkbar, die Fußschaltereinheit 10 lediglich mit einem Fußschalter 12; 13 auszubilden. Alle diese Ausgestaltungen werden von der erfindungsgemäß vorgeschlagenen Lösung mit umfaßt, da sich dabei das konstruktive Prinzip der Fußschaltereinheit 10 nicht ändert.

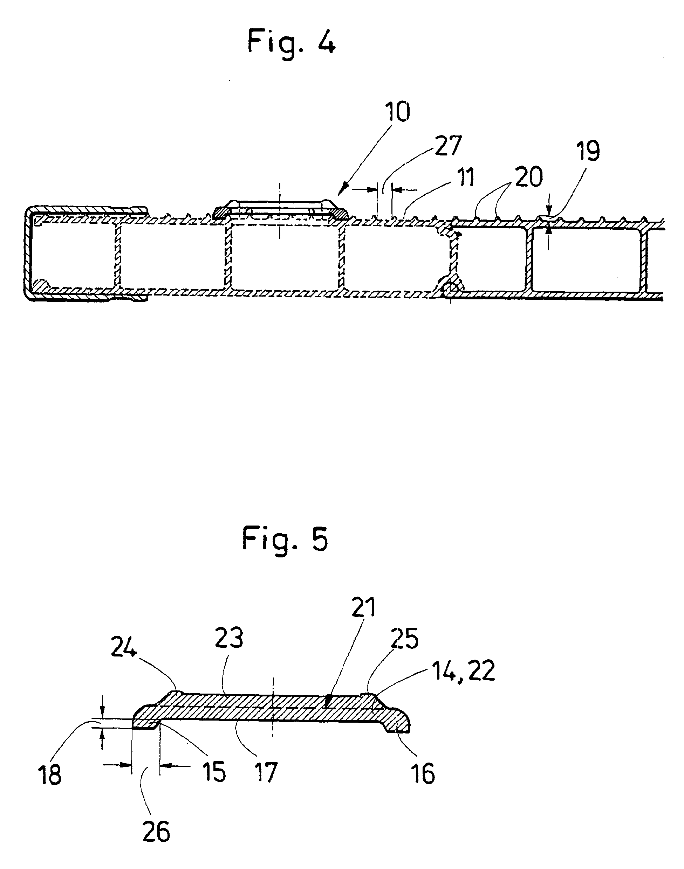

Das Gehäuse der Fußschaltereinheit 10 umfaßt ein erstes plattenförmiges Element 14 und ein zweites plattenförmiges Element 22, die bei der hier dargestellten Ausgestaltung der Fußschaltereinheit 10 integral miteinander ausgebildet sind. Sowohl das erste plattenförmige Element 14 als auch das zweite plattenförmige Element 22 weisen einen im wesentlichen U-profilförmig ausgebildeten Querschnitt auf, vgl. Fig. 5. Die die innere Ebene bzw. Innenfläche 17 begrenzenden Stege 15, 16 des ersten plattenförmigen Elements 14 stehen in entgegengesetzter Richtung zu den das zweite "plattenförmige" Element mit seinen die Öffnung 23 begrenzenden Stegen 24, 25 voneinander weg. Die Höhe 18 der Stege 15, 16 entspricht bspw. der Höhe 19 von Stegen 20, die auf der Oberfläche einer Ladeplattform 11 im wesentlichen parallel voneinander beabstandet angeordnet sind, vgl. Fig. 4. Die Breite 26 der Stege 15, 16 entspricht in etwa der Breite 27 des Tales, das zwischen jeweils zwei Stegen 20 auf der Oberfläche der Ladeplattform 11 gebildet wird. So kann bei entsprechend dimensionierter Gesamtbreite des ersten plattenförmigen Elements 14 dieses mit seinen beiden Stegen 15, 16 in ein jeweiliges Tal zwischen zwei Stegen 20 des plattenförmigen Elements eingreifen und wird dort in bezug auf die Darstellung von Fig. 4 gegen seitliche Verschiebung fixiert. Die Höhe 19 der Stege 20 der Ladeplattform 11 entspricht im wesentlichen der Höhe 18 des ersten plattenförmigen Elements 14, bezogen auf die Innenebene bzw. Innenoberfläche 17 zwischen den beiden von dieser vorstehenden Stegen 15, 16. Somit kann das erste plattenförmige Element 14 mit seiner Innenfläche 14 auf den Stegen 20 der Ladeplattform 11 aufliegen.

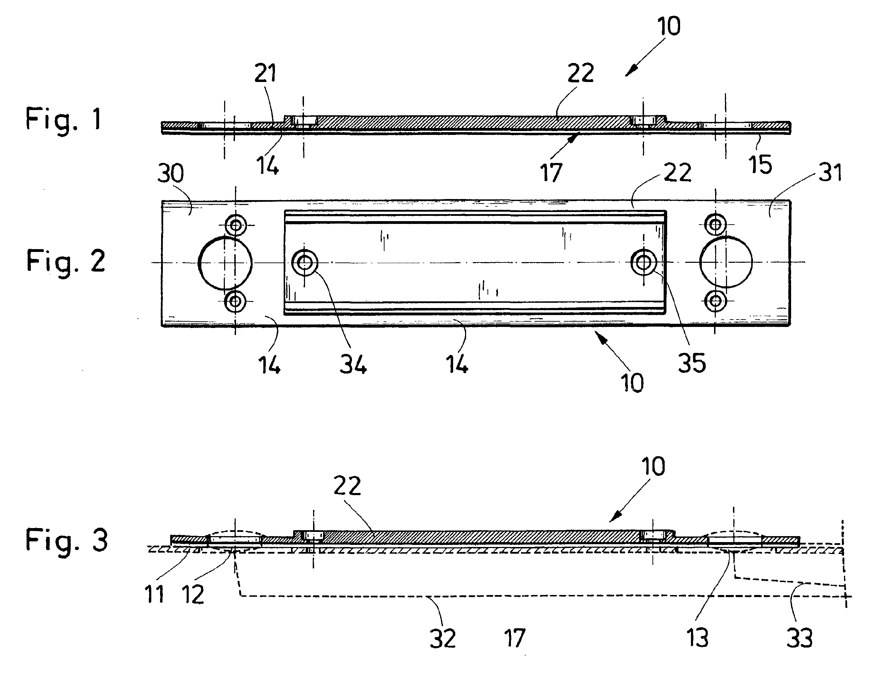

Das mit dem plattenförmigen Element 14 hier integrale zweite plattenförmige Element 22 bedeckt das erste plattenförmige Element 14 lediglich teilweise, vgl. die Fig. 1 bis 3. In den in bezug auf die Darstellung von Fig. 1 bis 3 linken und rechten Seitenflächen ist das zweite plattenförmige Element 22 nicht ausgebildet, d.h. hier bildet die flache Oberfläche 21 einen flächigen Absatz und dient zur Aufnahme der Fußschalter 12, 13, die auf geeignete Weise in dort ausgebildeten Löchern 28, 29 aufgenommen werden, vgl. auch Fig. 3.

Das integral ausgebildete erste und zweite plattenförmige Element 14, 22 kann als Halbzeug in Form eines entsprechend ausgebildeten Stranggußprofiles hergestellt werden, bspw. aus einem geeignet gewählten Metall oder einer geeignet ausgewählten Metallegierung, wobei die beiden in bezug auf die Darstellung der Fig. 1 bis 3 linken und rechten Endbereiche 30, 31 bspw. mittels Fräsung geeignet bearbeitet werden, so daß die beim Stranggußprofil dort ebenfalls ursprünglich ausgebildeten entsprechenden Endbereiche des plattenförmigen Elements 22 entfernt werden. Dieses ist bei der integralen Ausbildung des ersten plattenförmigen Elements 14 mit dem zweiten plattenförmigen Element 22 die einzige wesentliche mechanische Bearbeitung, die notwendig ist.

In der Öffnung 23, die zwischen den beiden Stegen 24, 25 des zweiten plattenförmigen Elements 22 gebildet wird, können bspw. Markierungs- und/oder Hinweismittel vorgesehen werden, die der Bedienungsperson die notwendigen Hinweise zum Betrieb der Fußschalter 12, 13 bzw. der Ladeplattform 11 schlechthin geben können und ggf. auch Warnhinweise zur Sicherstellung eines ordnungsgemäßen Betriebes. Die beiden die Öffnung 23 begrenzenden Stege 24, 25 verhindern auch, daß die Bedienungsperson mit ihrem Schuhwerk die Markierungs- und/oder Hinweismittel beschädigen und somit unkenntlich machen kann. Schließlich dienen die Stege 24, 25 genauso wie die Stege 15, 16 des ersten plattenförmigen Elements 14 der Vergrößerung der Stabilität der Fußschaltereinheit 10 insgesamt.

Die Fußschalter 12, 13, vgl. Fig. 3, weisen eine derart geringe Höhe auf, daß sie einerseits von der Oberfläche 21 des ersten plattenförmigen Elements 14 in den Endbereichen 30, 31 nur geringfügig hervorstehen, so daß sie noch mit dem Fuß der Bedienungsperson betätigbar sind, und sie stehen nach unten, bezogen auf die Darstellung der Fig. 3, d.h. in Richtung der Ladeplattform 14, nur geringfügig in diese hinein, so daß dort lediglich kleine Löcher zur Aufnahme des entsprechenden Teils der Fußschalter 12, 13 vorzusehen sind. Die Kabelverbindungen 32, 33 mit den Fußschaltern 12, 13 werden mit abgesetzt von der Fußschaltereinheit 12 angeordneten elektrischen und/oder elektronischen Steuer- und/oder Regeleinrichtungen verbunden (nicht dargestellt), die zentral an einem Fahrzeug, an dem das Ladebordwandsystem mit der Ladeplattform 11 angeordnet ist, vorgesehen sind und von dort aus auch eine übliche manuelle Betätigung der Ladeplattform 11 gestatten, wenn bspw. der Ladevorgang bzw. Entladevorgang begonnen bzw. beendet werden soll. Mittels geeigneter Schraubverbindungen 34, 35, vgl. Fig. 2, kann die Fußschaltereinheit 10 auf der Ladeplattform 11 befestigt werden. Die Schraubverbindungen 24, 25 können auch gleichzeitig dazu dienen, das zweite plattenförmige Element 21 mit dem ersten plattenförmigen Element 14 zu verbinden, wenn beide Elemente 14, 22 nicht integral sondern als gesonderte Teile hergestellt sind und erst im Zuge der Montage auf der Ladeplattform 11 verbunden werden sollen.

### Bezugszeichenliste

- 10: Fußschaltereinheit
- 11: Ladeplattform
- 12: Fußschalter
- 13: Fußschalter
- 14: plattenförmiges erstes Element (Gehäuse)
- 15: Steg
- 16: Steg
- 17: Innenfläche
- 18: Höhe (Steg-Element)
- 19: Höhe (Steg-Ladeplattform)
- 20: Steg
- 21: Oberfläche erstes Element
- 22: plattenförmiges zweites Element
- 23: Öffnung
- 24: Steg
- 25: Steg
- 26: Breite (Steg-Element)
- 27: Breite Tal zwischen den Stegen
- 28: Loch (Aufnahme-Fußschalter)
- 29: Loch (Aufnahme-Fußschalter)
- 30: Endbereich
- 31: Endbereich
- 32: Kabelverbindung
- 33: Kabelverbindung
- 34: Schraubenverbindung
- 35: Schraubenverbindung

## Patentansprüche

1. Fußschaltereinheit für Ladeplattformen von Ladebordwandsystemen für Fahrzeuge, mit denen die Ladeplattform durch entsprechende Betätigung von Fußschaltern zum Anheben und Absenken veranlaßt wird, umfassend ein Gehäuse, in dem die Fußschalter vorhanden sind, wobei das Gehäuse auf der Ladeplattform befestigbar ist, **dadurch gekennzeichnet, daß** das Gehäuse aus einem plattenförmigen Element (14) besteht.

2. Fußschaltereinheit nach Anspruch 1, **dadurch gekennzeichnet, daß** das plattenförmige Element (14) einen U-profilförmigen Querschnitt aufweist.

3. Fußschaltereinheit nach Anspruch 2, **dadurch gekennzeichnet, daß** die Stege (15, 16), bezogen auf die Innenfläche (17) des Elements (14), eine Höhe (18) entsprechend der Höhe (19) von von der Ladeplättform (11) vorspringenden Stegen (20) aufweisen.

4. Fußschaltereinheit nach einem oder mehreren der Ansprüche 1 bis 3, **dadurch gekennzeichnet, daß** auf der Oberfläche (21) des Elements (14), die im befestigten Zustand der Ladeplattform (11) abgewendet ist, ein das Element (14) wenigstens teilweise bedeckendes zweites plattenförmiges Element (22) angeordnet ist.

5. Fußschaltereinheit nach Anspruch 4, **dadurch gekennzeichnet, daß** das zweite plattenförmige Element (22) mit dem ersten plattenförmigen Element (14) integral ausgebildet ist.

6. Fußschaltereinheit nach Anspruch 4, **dadurch gekennzeichnet, daß** das zweite plattenförmige Element (22) auf dem ersten plattenförmigen Element (14) befestigbar ist.

7. Fußschaltereinheit nach einem oder mehreren der Ansprüche 1 bis 6, **dadurch gekennzeichnet, daß** das zweite plattenförmige Element (22) im Querschnitt U-profilförmig ausgebildet ist, wobei zwischen den dadurch gebildeten Stegen (24, 25) eine Öffnung (23) gebildet wird.

8. Fußschaltereinheit nach Anspruch 7, **dadurch gekennzeichnet, daß** die Öffnung (23) zur Aufnahme von Markierungs- und/oder Hinweismitteln ausgeformt ist.

9. Fußschaltereinheit nach einem oder mehreren der Ansprüche 1 bis 8, **dadurch gekennzeichnet, daß** die Schalter (12, 13) Mikroschalter sind.

10. Fußschaltereinheit nach einem oder mehreren der Ansprüche 1 bis 8, **dadurch gekennzeichnet, daß** die Schalter (12, 13) Sensorschalter sind.

11. Fußschaltereinheit nach einem oder mehreren der Ansprüche 1 bis 10, **dadurch gekennzeichnet, daß** die mit den Schaltern (12, 13) zusammenwirkenden elektrischen und/oder elektronischen Steuer- und/oder Regeleinrichtungen abgesetzt von der Fußschaltereinheit (12) angeordnet sind.

12. Fußschaltereinheit nach einem oder mehreren der Ansprüche 1 bis 11, **dadurch gekennzeichnet, daß** das plattenförmige Element (14; 22) als lediglich abzulängendes Halbzeug bereitstellbar ist.

13. Fußschaltereinheit nach einem oder mehreren der Ansprüche 1 bis 12, **dadurch gekennzeichnet, daß** wenigstens das erste plattenförmige Element (14) aus einem Leichtmetallwerkstoff besteht.

14. Fußschaltereinheit nach einem oder mehreren der Ansprüche 1 bis 12, **dadurch gekennzeichnet, daß** wenigstens das erste plattenförmige Element (14) aus einem Kunststoffwerkstoff besteht.

15. Fußschaltereinheit nach einem oder mehreren der Ansprüche 1 bis 12, **dadurch gekennzeichnet, daß** wenigstens das erste plattenförmige Element (14) aus einem Verbundwerkstoff besteht.
